# DEMANDE DE BREVET EUROPEEN

(11) **EP 1 571 518 A1**
(43) Date de publication de la demande: **07.09.2005**
(21) Numéro de dépôt: 05290427.3
(22) Date de dépôt: 24.02.2005
(51) Int. Cl.: G05D 23/275, A47J 37/06

(54) **Sous-ensemble chauffant amovible adapté à être positionné sur le corps principal d'un appareil de cuisson**

(30) Priorité: 03.03.2004 FR 0402193
(71) Demandeur: SEB S.A., 69130 Ecully (FR)
(72) Inventeur: Dauvergne, François, 74600 Seynod (FR)
(74) Mandataire: Lemoine, Jean-Sébastien

(57) **Abrégé**

L'invention concerne un sous-ensemble chauffant (4) comportant un organe de sécurité (9) mobile entre une position d'ouverture et une position de fermeture, et un thermostat (8). Selon l'invention, le thermostat (8) comprend des contacteurs (11,12) reliant le thermostat (8) à un circuit électrique, un interrupteur de régulation thermique mobile entre une position ouverte et une position fermée, et un deuxième interrupteur (14) monté en série avec l'interrupteur de régulation thermique, et l'organe de sécurité (9) coopère avec le deuxième interrupteur (14) de sorte que, quand l'organe de sécurité (9) est dans sa position de fermeture, le second interrupteur (14) est fermé, et quand l'organe de sécurité (9) est dans sa position d'ouverture, le second interrupteur (14) est ouvert.

## Description

La présente invention concerne un sous-ensemble chauffant amovible qui est adapté à être positionné sur un corps principal d'un appareil de cuisson.

On connaît un tel sous-ensemble chauffant amovible du type comportant un organe de chauffe et un organe de sécurité, mobile entre une position d'ouverture interdisant l'alimentation électrique de l'organe de chauffe et une position de fermeture autorisant cette alimentation, le sous-ensemble chauffant étant adapté à coopérer avec le corps principal de sorte que, quand il est séparé du corps principal, l'organe de sécurité est dans sa position d'ouverture et, quand il est correctement positionné sur le corps principal, l'organe de sécurité est dans sa position de fermeture autorisant cette alimentation. Un tel sous-ensemble chauffant est décrit dans le brevet US 5 504 295.

Dans l'état de la technique, afin, d'une part, d'empêcher toute alimentation de l'organe de chauffe quand le sous-ensemble chauffant n'est pas correctement placé, et, d'autre part, de couper immédiatement l'alimentation de l'organe de chauffe quand le sous-ensemble chauffant est retiré du corps principal, le circuit électrique d'alimentation de l'organe de chauffe comprend, comme organe de sécurité, un microrupteur qui est placé à l'intérieur du boîtier électrique du sous-ensemble chauffant et qui, par défaut, coupe l'alimentation. Le corps principal comprend une patte d'actionnement qui est adaptée à pénétrer dans le boîtier et entraîner le microrupteur dans sa position fermée uniquement quand le sous-ensemble chauffant est correctement positionné.

Toutefois, ces systèmes de sécurité ont l'inconvénient majeur d'être cher : outre le prix du microrupteur, il y a aussi le temps mis pour son montage et celui de l'ensemble du câblage nécessaire pour le connecter au circuit d'alimentation de l'organe de chauffe.

Le problème posé est de réaliser un sous-ensemble chauffant n'ayant pas de microrupteur de sécurité tout en répondant aux exigences de sécurité relative à l'alimentation de l'organe de chauffe.

Selon l'invention, le sous-ensemble chauffant du type précité, comprend un thermostat qui comprend, des contacteurs adaptés à le relier au circuit électrique d'alimentation de l'organe de chauffe, un interrupteur de régulation thermique mobile entre une position ouverte et une position fermée, et un deuxième interrupteur qui est monté en série avec l'interrupteur de régulation thermique et qui comprend une première lame en contact électrique avec l'un des contacteurs, et une deuxième lame en contact électrique avec l'interrupteur de régulation thermique, au moins une des deux lames étant flexible entre une position en contact avec l'autre lame, et une position sans contact, le deuxième interrupteur n'étant formé que par les deux lames, et l'organe de sécurité coopérant avec ce deuxième interrupteur de sorte que, quand l'organe de sécurité est dans sa position de fermeture, le second interrupteur est fermé, et quand l'organe de sécurité est dans sa position d'ouverture, le second interrupteur est ouvert.

Ainsi, le microrupteur est supprimé et il est remplacé par un deuxième interrupteur situé dans le thermostat. De ce fait, le problème de son montage dans le boîtier du sous-ensemble chauffant et celui du câblage est supprimé : tout est intégré dans le thermostat. De plus, le surcoût de l'intégration du deuxième interrupteur est très faible vu que cet interrupteur n'est formé que par deux lames conductrices. Le deuxième interrupteur n'est pas un interrupteur de régulation thermique (les lames qui le constituent ne sont pas des bilames).

D'autres particularités et avantages de la présente invention apparaîtront dans la description d'un mode de réalisation donné à titre d'exemple non limitatif et illustré dans les figures mises en annexe.
La figure 1 est une vue en coupe d'un barbecue électrique comprenant un sous-ensemble chauffant conforme à la présente invention ;

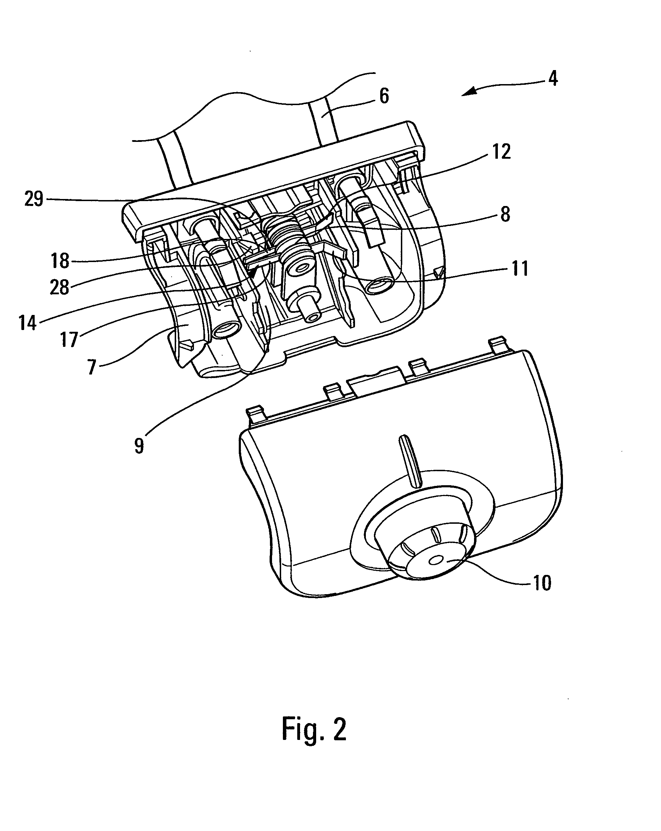

La figure 2 est une vue en perspective éclatée d'un sous-ensemble chauffant comportant un thermostat conforme à la présente invention, l'organe de sécurité étant en position d'ouverture ;
La figure 3 est une vue similaire à la figure 2, l'organe de sécurité étant en position de fermeture ;
La figure 4 est une vue en perspective d'un thermostat conforme à la présente invention ; et
La figure 5 est une vue schématique en perspective de face d'une partie du thermostat illustré à la figure 4.

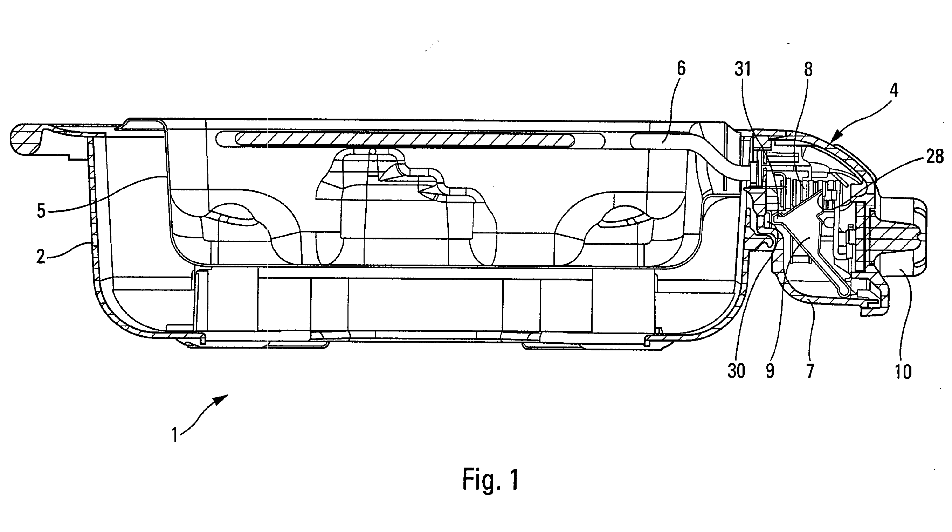

Comme on peut le voir à la figure 1, l'appareil électroménager 1 (en l'occurrence un barbecue électrique 1) comprend un corps principal 2, une grille (non représentée) amovible positionnée sur le corps principal 2 et adaptée à recevoir un aliment à cuire, un sous-ensemble chauffant 4 amovible positionné sur le corps principal 2 et sous la grille et adaptée à transmettre la chaleur à l'aliment à cuire, et un réflecteur thermique 5 amovible positionné dans le corps principal 2 et adapté à renvoyer le rayonnement thermique émis par le sous-ensemble chauffant 4 en direction du corps principal 2 vers la grille.

Le sous-ensemble chauffant 4 comprend un organe de chauffe 6 (en l'occurrence, une résistance électrique de chauffe 6), un boîtier 7 à l'intérieur duquel sont disposés les différents éléments de contrôle et de régulation de l'alimentation de la résistance électrique de chauffe 6. Parmi ces éléments de contrôle et de régulation, il y a un thermostat 8 et un organe de sécurité 9. Par ailleurs, le sous-ensemble chauffant 4 comprend également un bouton de commande manuelle 10 permettant à un utilisateur d'agir sur le thermostat 8 et de réguler ainsi l'alimentation de la résistance électrique de chauffe 6.

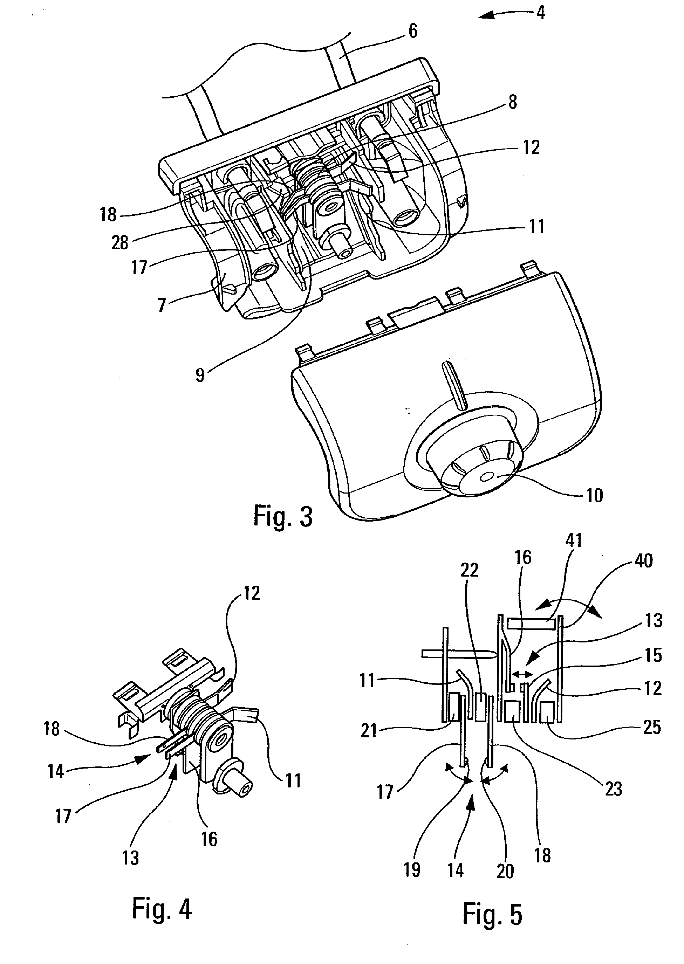

Comme on peut le voir aux figures 4 et 5, le thermostat 8 comprend deux contacteurs 11,12 qui permettent de relier le thermostat 8 au circuit électrique de l'alimentation de la résistance électrique 6. Il comprend également un interrupteur de régulation thermique 13 qui est mobile entre une position ouverte et une position fermée, ainsi qu'un deuxième interrupteur 14 qui est monté en série avec l'interrupteur de régulation thermique 13.

De façon classique, l'interrupteur de régulation thermique 13 est formé, d'une part, par une languette 15 et par un ressort 16 dont la flexibilité dépend de la position du bouton de commande manuelle 10.

Dans le présent exemple, le deuxième interrupteur 14 est formé par deux lames 17,18: une première lame 17 qui est en contact électrique avec l'un des deux contacteurs 11,12, et une deuxième lame 18 qui est en contact électrique avec l'interrupteur de régulation thermique 13. Les deux lames 17,18 sont flexibles de façon à pouvoir bouger entre une position de contact dans laquelle elles sont en contact l'une avec l'autre, et une position dans laquelle elles ne sont pas en contact. De préférence, les lames flexibles 17,18 sont déformables élastiquement et elles sont agencées de façon à être naturellement dans leur position sans contact. Le deuxième interrupteur 14 n'est pas un interrupteur de régulation thermique, c'est un interrupteur qui n'est formé que par les deux lames conductrices 17,18.

Afin d'améliorer la conduction électrique, les deux lames 17,18 sont munies, à leur extrémité libre, d'un point de contact 19,20 en argent.

Ainsi, dans le présent exemple, l'empilement des isolants et des éléments conducteurs dans le thermostat 8 est le suivant : un premier anneau isolant 21, une première lame 17 du deuxième interrupteur 14, le premier contacteur 11 permettant la connexion électrique du thermostat 8 (en contact électrique avec la première lame 17), un deuxième anneau isolant 22, la deuxième lame 18 du deuxième interrupteur 14, le ressort 16 de l'interrupteur de régulation thermique 13 (en contact électrique avec la deuxième lame 18), un troisième anneau isolant 23, la languette 15 de l'interrupteur de régulation thermique 13, le deuxième contacteur 12 permettant la connexion électrique du thermostat 8 (en contact électrique avec la languette 15), un quatrième anneau isolant 25, et un bilame 40.

Ainsi, quand les deux lames 17,18 sont en contact l'une avec l'autre, le thermostat 8 est équivalent à un thermostat classique : quand le ressort 16 est en contact avec la languette 15, l'interrupteur de régulation thermique 13 est fermé et le courant électrique peut circuler au travers du thermostat 8, et quand le ressort 16 n'est plus en contact avec la languette 15, l'interrupteur de régulation thermique 13 est ouvert et le courant électrique ne circule plus au travers du thermostat 8. La mobilité du ressort 16 étant due à la déformation du bilame 40 en fonction de la température qui l'environne, bilame 40 auquel le ressort 16 est relié par l'intermédiaire de la toise 41.

L'organe de sécurité 9 est mobile entre une position d'ouverture et une position de fermeture et coopère avec le deuxième interrupteur 14 du thermostat 8 de sorte que, quand l'organe de sécurité 9 est dans sa position de fermeture, le deuxième interrupteur 14 est fermé, et quand l'organe de sécurité 9 est dans sa position d'ouverture, le deuxième interrupteur 14 est ouvert.

Dans le présent exemple, l'organe de sécurité 9 comporte un doigt d'entraînement 28 adapté à entrer en contact avec une surface d'entraînement 29 portée par le second interrupteur 14 de façon à entraîner le second interrupteur 14 dans sa position fermée quand l'organe de sécurité 9 est dans sa position de fermeture. En l'occurrence, la surface d'entraînement 29 est portée par une des deux lames flexibles 17,18 du second interrupteur 14.

Dans le présent exemple, l'organe de sécurité 9 est une pièce monobloc mobile. Elle est monté pivotante dans le boîtier 7 autour d'un axe de rotation.

Le corps principal 2 du barbecue 1 comporte un doigt d'actionnement 30 qui est adapté à entrer en contact et à déplacer une patte d'actionnement 31 portée par l'organe de sécurité 9 de façon à entraîner ce dernier dans sa position de fermeture quand le sous-ensemble chauffant 4 est correctement positionné sur le corps principal 2. Ainsi, quand le sous-ensemble chauffant 4 est séparé du corps principal 2, l'organe de sécurité 9 est dans sa position d'ouverture (et de ce fait, le second interrupteur 14 est ouvert, ce qui empêche toute alimentation électrique de la résistance électrique 6), et, quand le sous-ensemble chauffant 4 est correctement positionné sur le corps principal 2, le doigt d'actionnement 30 a entraîné la patte d'actionnement 31 et l'ensemble de l'organe de sécurité 9 dans sa position de fermeture (et de ce fait, le second interrupteur 14 est fermé, l'alimentation électrique de la résistance électrique 6 pouvant alors être régulée par le thermostat 8).

Ainsi, en utilisation, si le sous-ensemble chauffant 4 est situé hors du corps principal, même si le bouton de commande manuelle 10 est actionné, l'organe de chauffe 6 ne peut pas être alimenté. Si le sous-ensemble chauffant 4 est correctement positionné, l'alimentation de l'organe de chauffe 6 peut être régulé par action sur le bouton de commande manuelle 10. Si le sous-ensemble chauffant 4 est retiré du corps principal 2 alors que l'organe de chauffe 6 est alimenté, le doigt d'actionnement 30 n'agit plus sur la patte d'actionnement 31 et l'élasticité des lames 17,18 du second interrupteur 14 entraîne leur mise en position sans contact et la rotation de l'organe de sécurité vers sa position d'ouverture.

De plus, le réflecteur thermique 5 comprend un élément de support de la résistance 6 qui permet de positionner horizontalement celle-ci. Si le réflecteur thermique 5 n'est pas correctement placé sur le corps principal 2 (ou s'il n'est pas présent), le sous-ensemble chauffant 4 pivote à l'intérieur du corps principal 2 et de ce fait le boîtier 7 pivote vers le haut et s'éloigne du doigt d'actionnement 30 du corps principal 2. De ce fait, le doigt d'actionnement 30 ne peut pas coopérer avec la patte d'actionnement 31 et l'organe de sécurité 9 n'est pas entraîné dans sa position de fermeture.

Il serait possible que seule une des deux lames du second interrupteur soit flexible.

Il serait aussi possible d'utiliser un thermostat dont l'empilement des éléments constitutifs soit différent.

## Revendications

1. Thermostat (8) comprenant des contacteurs (11,12) adaptés à relier le thermostat (8) à un circuit électrique, un interrupteur de régulation thermique (13) mobile entre une position ouverte et une position fermée, et un deuxième interrupteur (14) qui est monté en série avec l'interrupteur de régulation thermique (13) et qui comprend une première lame (17) en contact électrique avec l'un (11) des contacteurs (11,12), et une deuxième lame (18) en contact électrique avec l'interrupteur de régulation thermique (13), au moins une des deux lames (17,18) étant flexible entre une position en contact avec l'autre lame, et une position sans contact, **caractérisé en ce que** le deuxième interrupteur (14) n'est formé que par les deux lames (17,18).

2. Thermostat (8) selon la revendication 1, **caractérisé en ce que** la lame flexible est déformable élastiquement et agencée de façon à être naturellement sans contact avec l'autre lame.

3. Sous-ensemble chauffant (4) comportant un organe de sécurité (9) mobile entre une position d'ouverture et une position de fermeture, et un thermostat (8), **caractérisé en ce que** le thermostat (8) est conforme à la revendication 1 ou 2, l'organe de sécurité (9) coopérant avec le deuxième interrupteur (14) du thermostat (8) de sorte que, quand l'organe de sécurité (9) est dans sa position de fermeture, le second interrupteur (14) est fermé, et quand l'organe de sécurité (9) est dans sa position d'ouverture, le second interrupteur (14) est ouvert.

4. Sous-ensemble chauffant (4) selon la revendication 3, **caractérisé en ce que** l'organe de sécurité (9) comporte un doigt d'entraînement (28) adapté à entrer en contact avec une surface d'entraînement (29) portée par le second interrupteur (14) de façon à entraîner le second interrupteur (14) dans sa position fermée quand l'organe de sécurité (9) est dans sa position de fermeture.

5. Sous-ensemble chauffant (4) selon la revendication 4, **caractérisé en ce que** la surface d'entraînement (29) est portée par la lame flexible du thermostat (8) .

6. Sous-ensemble chauffant (4) selon l'une des revendications 3 à 5, **caractérisé en ce que** l'organe de sécurité (9) est une pièce monobloc montée de façon pivotante dans le sous-ensemble chauffant (4).

7. Appareil électroménager (1) comprenant un corps principal (2) qui possède un doigt d'actionnement (30), et un sous-ensemble chauffant (4) amovible adapté à être positionné sur le corps principal (2), **caractérisé en ce que** le sous-ensemble chauffant (4) est conforme à l'une des revendications 3 à 6, le doigt d'actionnement (30) étant adapté à coopérer avec une patte d'actionnement (31) portée par l'organe de sécurité (9), de sorte que, quand le sous-ensemble chauffant (4) est correctement positionné sur le corps principal (2), l'organe de sécurité (9) est dans sa position de fermeture sous l'action le doigt d'actionnement (30), et quand le sous-ensemble chauffant (4) est séparé du corps principal (2), l'organe de sécurité (9) est dans sa position d'ouverture.

8. Appareil électroménager (1) selon la revendication 7, **caractérisé en ce qu'**il comprend un réflecteur thermique (5) amovible qui est adapté à être positionné dans le corps principal (2) et qui comprend un élément de support qui est adapté à coopérer avec le sous-ensemble chauffant (4), de sorte que, quand le réflecteur (5) est hors du corps principal (2), le doigt d'actionnement (30) ne peut pas entraîner l'organe de sécurité (9) dans sa position de fermeture.
